# EUROPEAN PATENT APPLICATION

(11) **EP 4 478 505 A1**
(43) Date of publication of application: **18.12.2024**
(21) Application number: 24166481.2
(22) Date of filing: 26.03.2024
(51) Int. Cl.: H01M 50/213, H01M 50/291

(54) **BRACKET AND BATTERY MODULE**

(30) Priority: 16.06.2023 CN 202321539820 U; 21.02.2024 WO PCT/CN2024/077934
(71) Applicant: Eve Energy Co., Ltd., Huizhou, Guangdong 516006 (CN)
(72) Inventor: CHEN, Jingcong, Huizhou, 516006 (CN)
(74) Representative: Murgitroyd & Company

(57) **Abstract**

A bracket is applicable to a battery module including multiple cells. The bracket includes a base and multiple positioning devices. The base is provided with multiple placement grooves spaced apart from each other and arranged in an array, and has multiple arrangement areas spaced apart from each other. Each of the placement grooves has an outer periphery surrounded by ones of the arrangement areas, and the cells are capable of being inserted respectively into the plurality of placement grooves. The positioning devices are arranged respectively in the arrangement areas. Each of the positioning devices includes one or more elastic structures, and each of the elastic structures is configured to abut against an outer periphery of one of the cells.

## Description

### TECHNICAL FIELD

The present disclosure relates to battery technologies, and more particularly, to a bracket and a battery module.

### BACKGROUND

Generally, for assembly of a battery module, multiple cells are loaded to a positioning tool and then placed on a bracket by the positioning tool in order so that the multiple cells are plugged respectively into multiple placement grooves on the bracket. Then, structural adhesive is injected between the placement groove and the cell. After the structural adhesive is cured, a structure in which the multiple cells are fixed relatively to the bracket is obtained.

However, during the assembly, in order to avoid shift of the position of the cell relative to the bracket during the curing process of the structural adhesive, the positioning tool cannot be removed until the structural adhesive is cured. Thus, the assembly of the battery module is of low efficiency and the positioning tool cannot be utilized efficiently, which may result in low degree of mass production.

### SUMMARY

A bracket and a battery module are provided to solve the problem.

According to one or more embodiments of the present disclosure, a bracket applied to a battery module including multiple cells includes a base and multiple positioning devices. The base is provided with multiple placement grooves arranged at intervals and arranged in an array, and has multiple arrangement areas which are arranged at intervals and respectively surround the placement grooves. The placement grooves are configured to accommodate the cells in a one-to-one correspondence. The positioning devices are arranged respectively in the plurality of arrangement areas, each of the positioning devices includes one or more elastic structures, and each of the elastic structures is configured to abut against an outer periphery of one of the cells.

According to one or more embodiments of the present disclosure, a battery module includes multiple cells and the bracket described above. The cells are respectively inserted in the placement grooves, and each of the elastic structures abuts against an outer periphery of one of the cells in a one-to-one correspondence.

Each of the placement grooves is surrounded by multiple arrangement areas arranged at intervals, multiple positioning devices correspond to multiple arrangement areas in a one-to-one correspondence, so that any one of the placement grooves is surrounded by multiple positioning devices arranged at intervals. The elastic structures included in each of the positioning devices is contact with the outer peripheral surface of the corresponding cell, so that multiple positioning devices surround and abut against the outer peripheral surface of each of the cells installed to the bracket for positioning. Therefore, there is no need to use a positioning tool to load and position the cells, so that the assembling procedure of the battery module including the bracket is simplified and the assembling efficiency of the battery module is improved.

Since each of the cells can be continuously positioned by the elastic structures, not only can the position of each of the cells relative to the bracket be maintained stable during the curing process of the structural adhesive, thereby reducing the possibility of poor welding when each of the cells is welded to the cell connecting structure included in the battery module, for example, when each of the cell sis welded to the Cells Contact System (CCS), but also the position of each of the cells relative to the bracket can be maintained stable during the use of the battery module, so as to reduce the possibility of welding failure of the cells and the electric circuit included in the battery module due to the shaking of the cells after the structural adhesive is aged and the fixing effect on the cells becomes worse, thereby effectively extending the service life of the battery module.

### BRIEF DESCRIPTION OF THE DRAWINGS

FIG. 1 is a perspective view of a bracket according to one or more embodiments of the present disclosure.
FIG. 2 is a top view of a bracket according to one or more embodiments of the present disclosure.
FIG. 3 is a perspective view of a partial structure of a bracket according to one or more embodiments of the present disclosure.
FIG. 4 is a front view of a partial structure of a bracket according to one or more embodiments of the present disclosure.
FIG. 5 is a cross-sectional view along line A-A in FIG. 4.
FIG. 6 is an exploded diagram of the structure shown in FIG. 5.
FIG. 7 is an exploded diagram of a partial structure of a bracket according to one or more embodiments of the present disclosure.
FIG. 8 is an exploded diagram of an elastic structure according to one or more embodiments of the present disclosure.
FIG. 9 is a perspective view of a battery module according to one or more embodiments of the present disclosure.
**FIG.** 10 is an exploded diagram of a battery module according to one or more embodiments of the present disclosure.

### DETAILED DESCRIPTION

Some embodiments of the present disclosure will be described in detail below with reference to the accompanying drawings. The embodiments are described for illustrative purposes only and are not intended to limit the present disclosure.

In the description of the present disclosure, unless expressly stated and defined otherwise in the present disclosure, the terms "connected" and "fixed" should be understood broadly, and may be, for example, a fixed connection, a detachable connection, integrated, a mechanical connection, an electrical connection, a direct connection, an indirect connection by means of an intermediate medium, an internal connectivity of two parts, or an interaction relationship between two parts. For those of ordinary skill in the art, the specific meaning of the above terms in the present disclosure will be understood based on specific situations.

In the description of the present disclosure, unless expressly stated and defined otherwise in the present disclosure, that the first feature is "above" or "below" the second feature may include direct contact of the first feature and the second feature, as well as direct contact between the first feature and the second feature through another feature therebetween, rather than direct contact. And that the first feature is "above" or "on" the second feature includes that the first feature is directly above and obliquely above the second feature, or merely indicates that the level height of the first feature level is higher than that of the second feature. That the first feature is "below" or "under" the second feature includes that the first feature is directly below and obliquely below the second feature, or merely indicates that the level height of the first feature level is lower than that of the second feature.

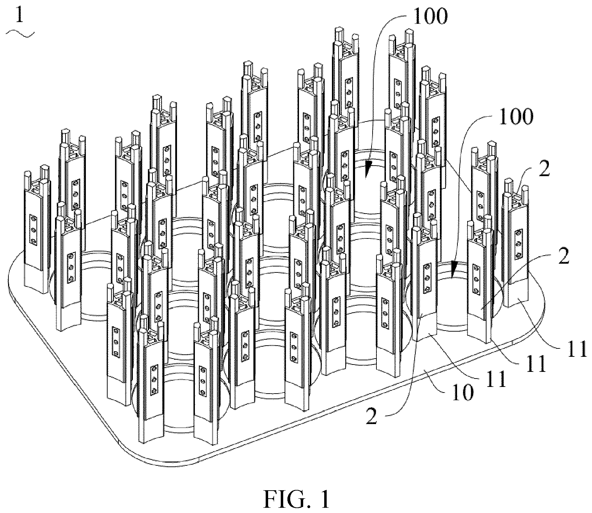

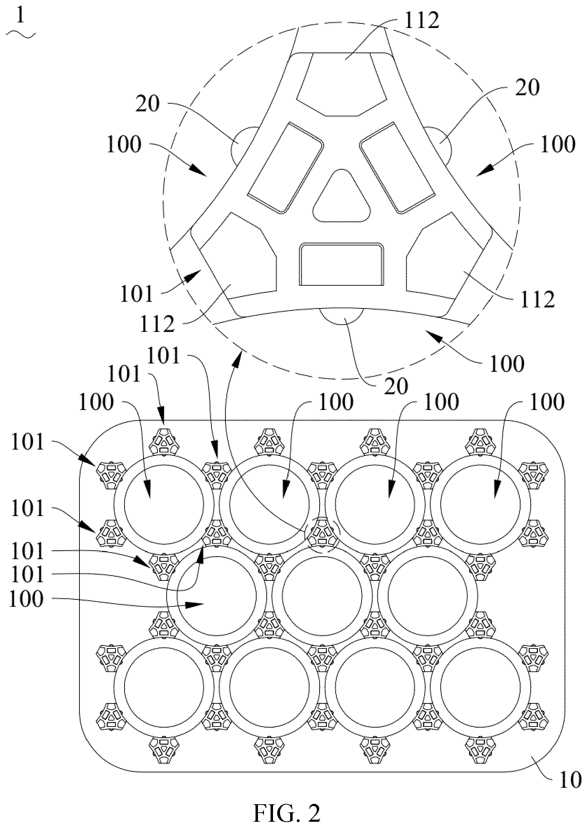

As shown in FIG. 1 and FIG. 2, according to one or more embodiments of the present disclosure, a bracket 1 is applied to a battery module including multiple cells. The bracket 1 includes a base 10 and multiple positioning devices 2. The base 10 is provided with multiple placement grooves 100 arranged at intervals and arranged in an array. The base 10 has multiple arrangement areas 101 which are arranged at intervals and respectively surround the placement grooves 100. The multiple cells may be inserted into the multiple placement grooves 100 in a one-to-one correspondence. The multiple positioning devices 2 are arranged in the multiple arrangement areas 101 in a one-to-one correspondence. Each of the positioning devices 2 include an elastic structure 20, and the elastic structure 20 may abut against an outer periphery of a corresponding cell.

The multiple arrangement areas 101 respectively surrounding the placement grooves 100 are arranged at intervals, so that each of the placement grooves 100 is surrounded by multiple positioning devices 2 arranged at intervals. And for a cell inserted into any one of the placement grooves 100, the cell can be surrounded by multiple elastic structures 20 and the outer peripheral surface of the cell can abut against multiple elastic structures 20, so that each of the cells can be positioned to be aligned with the center of one of the placement grooves 100 by balancing the elastic pressure applied to each of the cells by the multiple elastic structures 20. Therefore, according to one or more embodiments of the present disclosure, each of the cells can be directly loaded to the bracket 1, without loading the cells to a positioning tool, and using the positioning tool to position the cells, so that the assembly procedure of the battery module including the bracket 1 is simplified, the assembly efficiency of the battery module is improved, and the difficulty of mass production of the battery module is reduced.

Furthermore, the multiple cells may be fixed to the base 10 by structural adhesive. Generally, only an end of each of the cells is fixed to the base 10 by structural adhesive, an end of each of the cells away from the base 10 (that is, an end of each of the cells for electrical connection to a cell electrical connection structure included in the battery module) may still be shaken and shifted during subsequent manufacturing process and use of the battery module, resulting in low yield or failure of an electrical connection of the cells to the cell electrical connection structure. In the bracket 1 according to one or more embodiments of the present disclosure, each of the cells can be continuously positioned by the elastic structures 20. Therefore, on one hand, the position of each of the cells relative to the bracket 1 can remain stable during the curing process of the structural adhesive so as to reduce the possibility of poor welding when the cells are welded to the circuit included in the battery module, for example, Cells Contact System (CCS), and on the other hand, the elastic structures 20 enable the position of each of the cells relative to the bracket 1 to remain stable during the use of the battery module, so as to reduce possibility of welding failure between the cells and the cell electric connection structure caused by shaking of the cells after aging of the structural adhesive and deterioration of the fixing effect on the cells, thereby effectively extending the service life of the battery module.

Alternatively, multiple positioning devices 2 surround each of the placement grooves 100 and are arranged at uniform intervals, so that multiple elastic structures 20 corresponding to each of the placement grooves 100 also surround each of the placement grooves 100 and are arranged at uniform intervals, so that when multiple elastic structures 20 abut against each of the cells, the multiple elastic structures 20 provide more balanced support for each of the cells, and it is more easily to position each of the cells to be aligned with the center of one of the placement grooves 100.

Alternatively, each of the cells may include, but is not limited to, a cylindrical cell or a cuboid cell. Accordingly, each of the placement grooves 100 may be, but is not limited to, a circular groove or a square groove, as long as each of the placement grooves 100 is adapted to an outer peripheral shape of each of the cells and enables the cells to be inserted respectively in the placement grooves 100. According to one or more embodiments of the present disclosure, an example in which each of the cells is a cylindrical cell and each of the placement grooves 100 is a circular groove adapted to the outer peripheral shape of each of the cells is taken for description.

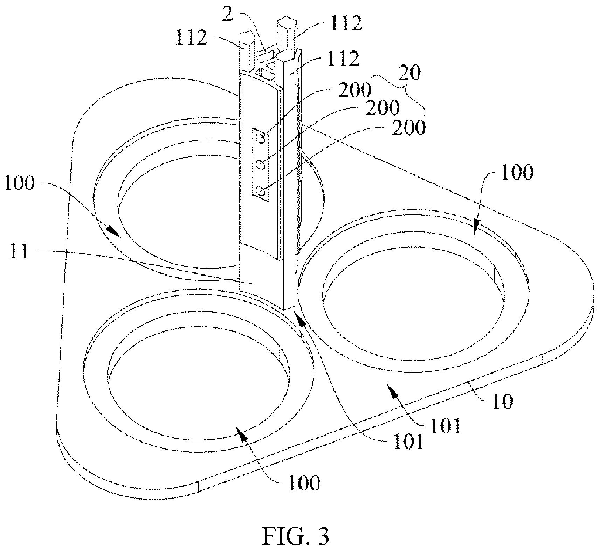

Alternatively, each of a portion of the arrangement areas 101 is surrounded by multiple placement grooves 100 arranged at intervals, in other words, a portion of the placement grooves 100 may share an arrangement area 101, and each of a portion of the positioning devices 2 may be surrounded by multiple placement grooves 100 arranged at intervals. Each of the portion of positioning device 2 includes multiple elastic structures 20, the multiple elastic structures 20 are disposed in one of the arrangement areas 101, and the multiple elastic structures 20 correspond to the multiple placement grooves 100 in a one-to-one correspondence, so that a portion of the placement grooves 100 share one of the positioning devices 2 to reduce the number of the positioning devices 2, the structure of the bracket 1 is more compact and the space utilization efficiency is higher. As shown in FIG. 3, for ease of observation, a partial structure of the bracket 1 is shown in FIG. 3, in which, for example, each of a portion of the arrangement areas 101 is surrounded by three placement grooves 100 arranged at intervals.

Only one adjacent placement groove 100 is provided on the periphery of each of another portion of the arrangement areas 101 (for example, remaining arrangement areas 101). Alternatively, each of the positioning device 2 respectively provided in the remaining arrangement areas 101 may also include multiple elastic structures 20. In other words, the positioning devices 2 may all be of the same structure, so that it is convenient for mass production of the positioning devices 2, and there is no need to distinguish the structures of the different positioning devices 2 during assembly so as to reduce the assembly difficulty of the bracket 1. As shown in FIG. 2, for example, the remaining arrangement areas 101 are arrangement areas 101 closest to the edge of the base 10, and only one adjacent placement groove 100 is provided on the periphery of each of the remaining arrangement areas 101.

Alternatively, the array arrangement of placement grooves 100 may include, but is not limited to, an array arrangement in which each of the arrangement areas 101 is surrounded by three placement grooves 100, an array arrangement in which each of the arrangement areas 101 is surrounded by four placement grooves 100, and the like. Alternatively, the placement grooves 100 are arranged in an array arrangement in which each of the arrangement areas 101 is surrounded by three placement grooves 100, so that the placement grooves 100 are arranged more compact, and a larger number of cells can be arranged on the bracket 1 of a same size.

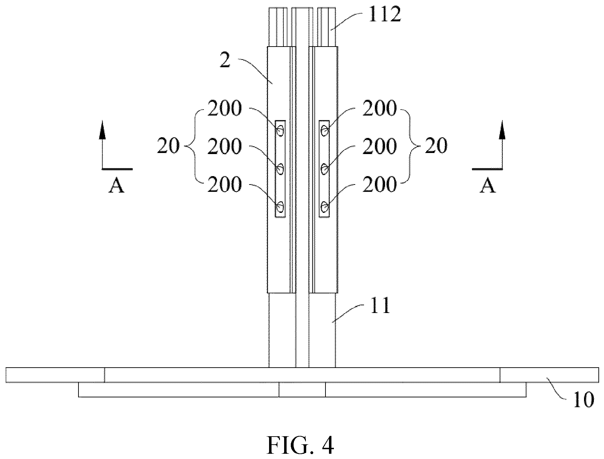

As shown in FIG. 3, FIG. 4 and FIG. 6, alternatively, each of the elastic structures 20 includes a mount 201 and one or more elastic units 200, wherein the mount 201 is provided in each of the arrangement areas 101, the elastic units 200 are provided in the mount 201.

For example, the one or more elastic units 200 may include one elastic unit 200.

For another example, the one or more elastic units 200 may include multiple elastic units 200. The multiple elastic units 200 may be provided at intervals in a direction perpendicular to a plane in which each of the arrangement areas 101 is located, so that the elastic units 200 may be respectively in contact with multiple positions of each of the cells in a length direction, thereby making the overall positioning effect of the elastic structures 20 on the cells more stable, and in particular, reinforcing the positioning effect on the end of each of the cells away from the base 10.

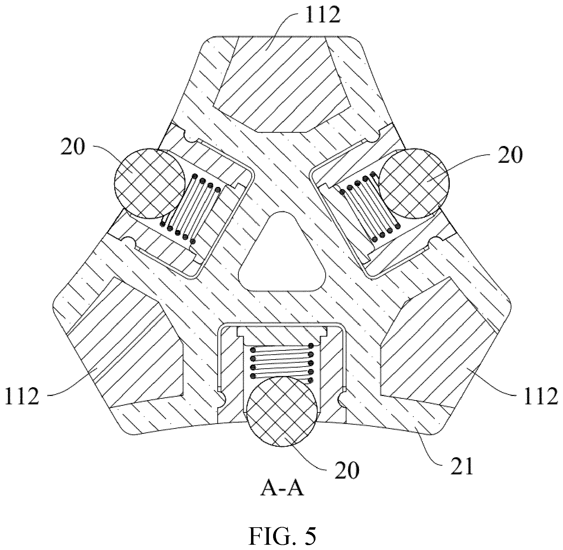

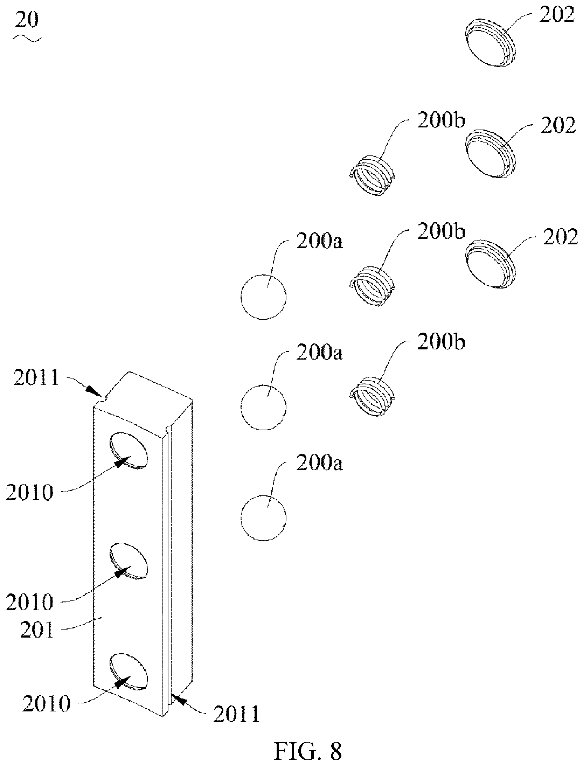

As shown in FIG. 5, FIG. 6, and FIG. 8, alternatively, each of the elastic units 200 may include a positioning head 200a that is contact with the outer peripheral surface of the corresponding cell, and an elastic member 200b that is disposed between the mount 201 and the positioning head 200a and is configured to provide elastic force for the positioning head 200a to abut against each of the cells. The elastic member 200b may include, but is not limited to, a spring or an elastic sheet. The elastic member 200b has a different attitude due to varying degrees of elastic deformation. Therefore, the positioning head 200a abuts against the outer peripheral surface of each of the cells rather than directly abuts against the elastic member 200b with the outer peripheral surface of each of the cells, so that the positioning head 200a has a relatively stable attitude when contacting with the corresponding cell, thereby stabilizing the support action of the elastic units 200 on the cells. The consistency of the support actions of multiple elastic units 200 on the cells is high, resulting a better positioning effect of multiple elastic structures 20 on the cells.

Alternatively, the positioning head 200a may be of a hard material. For example, the positioning head 200a may be of a steel material, an iron material, another hard metal material, or a hard non-metal material, so that the deformation occurring when the positioning head 200a abuts against the cell is reduced, thereby improving the stability of the support action of the positioning head 200a on the cells.

In order to increase the cell density of the battery module to make the structure of the battery module relatively compact, each of the arrangement areas 101 is often relatively small, and therefore, the size of the positioning head 200a is also often relatively small. Based on this, alternatively, the positioning head 200a may be a spherical structure, so that it is easy to manufacture the positioning head 200a of a small size, the positioning head 200a does not need to be assembled in a specific attitude, and the assembly difficulty of the positioning devices 2 is relatively small. Further, since the outer peripheral surface of the positioning head 200a is formed as a spherical surface, when the cells are loaded, it is easy for the positioning head 200a to move toward the elastic member 200b by contacting each of the cells with the outer peripheral surface of the positioning head 200a, thereby avoiding the structure of each of the cells and loading each of the cells between multiple elastic structures 20.

Alternatively, at least one positioning head 200a included in each of the elastic structures 20 can abut against the outer peripheral surface of the middle part of the corresponding cell, so that the positioning effect of the elastic structures 20 on the cells at least acts on the middle part of each of the cells. Thus multiple elastic structures 20 can surround and abut against the middle part of each of the cells, so that the positioning effect of multiple positioning devices 2 on the cells is reasonable and effective.

Alternatively, the mount 201 has a first surface 201a facing the corresponding cell, the first surface 201a is provided with one or more mounting grooves which respectively form one or more first openings 2010a on the first surface 201a. The positioning head 200a has a part located in each of the mounting grooves and a remaining part protruding from each of the first openings 2010a, and the elastic member 200b is disposed between the positioning head 200a and each of the mounting grooves, so that the elastic units 200 are assembled. Each of the elastic structures 20 is an integral structure, so that it makes the elastic units 200 less likely to be detached or fall apart, and is conducive to the overall transfer and installation of the elastic structures 20.

Alternatively, the mount 201 has a second surface 201b away from the corresponding cell. The mount 201 is provided with one or more through mounting holes 2010 which respectively form one or more second openings 2010b on the second surface 201b. Each of the elastic structures 20 may further include one or more cover plates 202 respectively covering the second openings 2010b to form the mounting grooves. The positioning head 200a has a part located in each of the mounting holes 2010 and a remaining part protruding from each of the first openings 2010a, and the elastic member 200b is disposed between the positioning head 200a and each of the cover plates 202, so that each of the elastic units 200 is assembled through the mount 201 and one of the cover plates 202 to make each of the elastic structures 20 an integral structure. It makes the elastic units 200 less likely to be detached or fall apart, and is conducive to the overall transfer and installation of the elastic structures 20.

Alternatively, the elastic member 200b can abut against a wall of each of the mounting holes 2010, so as to prevent the positioning head 200a from detaching from each of the mounting holes 2010 from each of the first openings 2010a.

In the assembling process, the positioning head 200a may be placed in each of the mounting holes 2010 through one of the second openings 2010b, the elastic member 200b may be placed in each of the mounting holes 2010 through one of the second openings 2010b, an end of the elastic member 200b is connected to the positioning head 200a, another end of the elastic member 200b is connected to each of the cover plates 202, and each of the second openings 2010b is covered by one of the cover plates 202. The positioning head 200a abuts against the wall of each of the mounting holes 2010 under the elastic force of the elastic member 200b, and a part of the positioning head 200a protrudes from each of the first openings 2010a to abut against the corresponding cell.

According to one or more embodiments of the present disclosure, when the elastic structure 20 includes multiple elastic units 200, multiple mounting holes 2010 may be provided and arranged at intervals. Multiple elastic units 200 are respectively arranged in multiple mounting holes 2010, so that the arrangement positions of multiple elastic units 200 can be respectively determined by multiple mounting holes 2010, Thus, the relative positional relationship of the multiple elastic units 200 is relatively stable, and the elastic units 200 can be spaced apart to avoid interference between different elastic units 200.

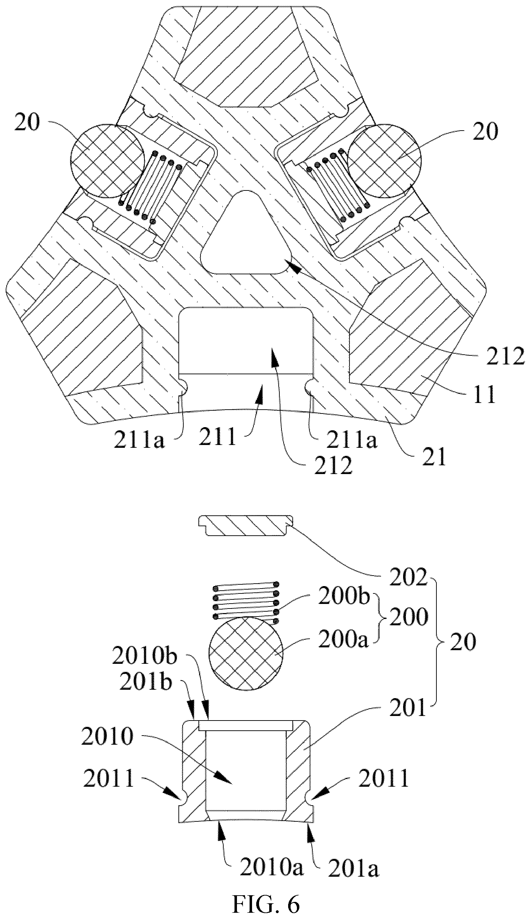

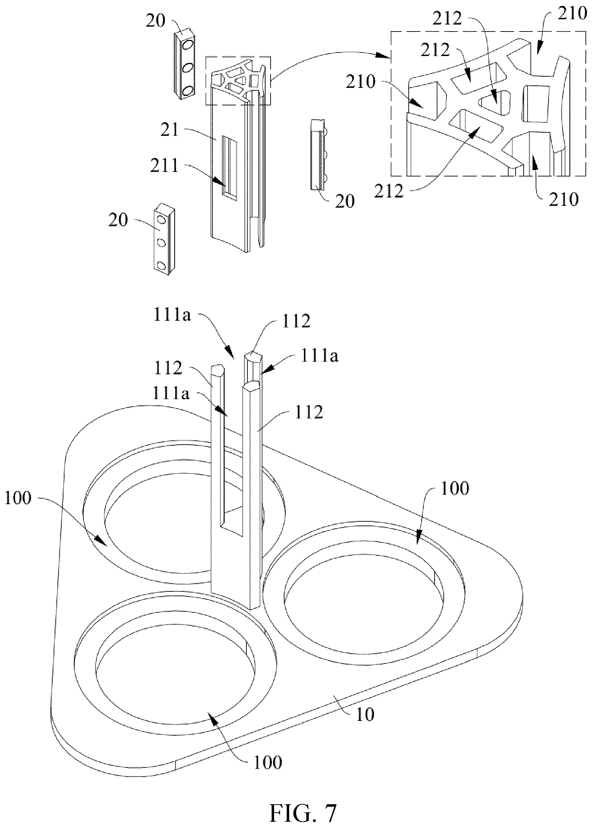

As shown in FIG. 6, FIG. 7 and FIG. 8, alternatively, each of the positioning devices 2 may further include a bearing 21. The bearing 21 is provided in each of the arrangement areas 101. Multiple elastic structures 20 are provided on the bearing 21, so that each of the positioning devices 2 can be assembled into an integral structure to facilitate movement, installation and replacement of the positioning devices 2 as a whole.

Alternatively, the outer peripheral surface of the bearing 21 may be provided with multiple accommodation slots 211 arranged at intervals. The multiple accommodation slots 211 correspond to multiple placement grooves 100 adjacent to each of the positioning devices 2 in a one-to-one correspondence, and the multiple elastic structures 20 are provided in the multiple accommodation slots 211 in a one-to-one correspondence, so that each of the elastic structures 20 has a part located in one of the accommodation slots 211 to be protected, and the structure of each of the positioning devices 2 is more compact.

When each of the elastic structures 20 further includes the mount 201 and the cover plates 202, alternatively, the mount 201 may be provided in each of the mounting grooves 211, and the second surface 201b of the mount 201 faces toward the bottom of each of the accommodation slots 211, so that the positioning head 200a may protrude from each of the accommodation slots 211 to abut against the corresponding cell.

Alternatively, the mount 201 may be clamped to each of the accommodation slots 211, so that the connection between each of the elastic structure 20 and each of the accommodation slots 211 is relatively stable, and each of the elastic structures 20 can be provided in one of the accommodation slots 211 in a simple process.

For example, one of more grooves 2011 may be provided on the outer peripheral surface of the mount 201. Each of the grooves 2011 extends along the length direction of the mount 201, and one or more strip-shaped protrusions 211a respectively opposite to the grooves 2011 are provided on the groove wall of each of the accommodation slots 211. During installation, each of the elastic structures 20 is pressed into one of the accommodation slots 211 so that the grooves 2011 are respectively clamped with the protrusions 211a, that is, the elastic structures 20 can be provided respectively in the accommodation slots 211. In one or more other embodiments of the present disclosure, the protrusions may be provided on the outer peripheral surface of the mount 201, and the grooves respectively opposite to the protrusions may be provided on the wall of each of the accommodation slots 211.

Alternatively, the bearing 21 may be provided with one or more weight-reducing grooves 212 spaced apart from multiple elastic structures 20. The weight of the bearing 21 is reduced by the weight-reducing grooves 212, thereby making the bracket 1 lighter.

Alternatively, there may be multiple weight-reducing grooves 212 which are arranged at intervals and provided on the bearing 21 to form a structural rib between every two adjacent weight-reducing grooves 212, so that the structural strength of the bearing 21 can meet the use requirements.

Alternatively, each of the weight-reducing grooves 212 may be communicated with one of the accommodation slots 211, thereby facilitating the manufacture of the bearing 21 provided with the weight-reducing grooves 212 and the accommodation slots 211.

As shown in FIG. 2, FIG. 6 and FIG. 7, alternatively, the bracket 1 may further include multiple supports 11, which are provided in multiple arrangement areas 101 in a one-to-one correspondence. The bearing 21 may be detachably connected to each of the supports 11 by means of a connection including, but not limited to, a pressing connection, a snap connection, a threaded connection, a magnetic suction connection, or the like, so that it is also convenient to disassemble the bearing 21 to replace one or more positioning devices 2 when it is found that the positioning functions of the positioning devices 2 are not satisfactory.

Alternatively, multiple rod-shaped parts 112 may be provided at intervals on a side of each of the supports 11 away from the base 10, and the bearing 21 may be provided with multiple slide grooves 210. The multiple slide grooves 210 are slidably connected to the multiple rod-shaped parts 112 in a one-to-one correspondence, so that the bearing 21 can be provided on or detached from each of the supports 11 from the side of each of the supports 11 away from the base 10 by plugging or unplugging. The disassembly and assembly method of the bearing 21 is simple and easy to operate.

Alternatively, each of the rod-shaped parts 112 may be in interference fit with one of the slide grooves 210 so that each of the rod-shaped part 112 is tightly pressed against the slide groove wall of one of the slide grooves 210. Thus, during use of the bracket 1, the bearing 21 is not easily detached from each of the supports 11, the structure of the bracket 1 is relatively stable, and the positioning effect of each of the elastic structures 20 on the cell is relatively stable.

Alternatively, the multiple rod-shaped parts 112 may surround the corresponding bearing 21 and may be arranged at uniform intervals, so that the limiting effect of the multiple rod-shaped parts 112 on the bearing 21 is more balanced and reasonable.

Alternatively, the slide grooves 210 may be provided on the outer peripheral surface of the bearing 21, and one or more third openings 111a are each formed by any two adjacent rod-shaped parts 112. Multiple third openings 111a correspond to multiple adjacent placement grooves 100 in a one-to-one correspondence. When each of the rod-shaped parts 112 is inserted into one of the slide grooves 210 of the bearing 21, multiple elastic structures 20 are respectively through the plurality of third openings 111a so as to abut against the corresponding cell.

In other one or more embodiments of the present disclosure, each of the slide grooves 210 may also be provided on the end surface of the bearing 21 facing one of the supports 11, and each of the slide grooves 210 is located inside the bearing 21.

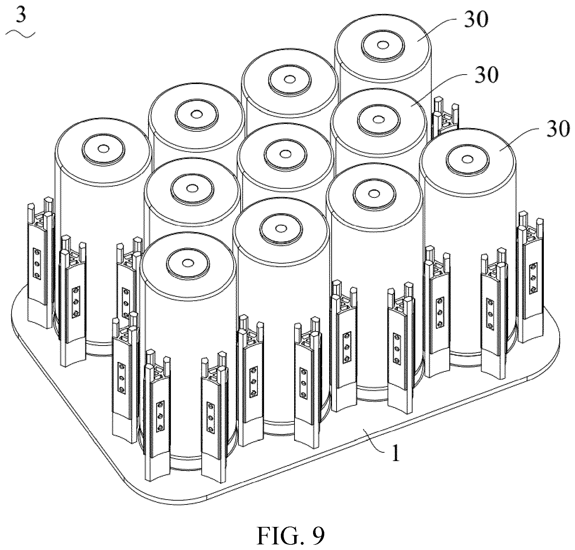

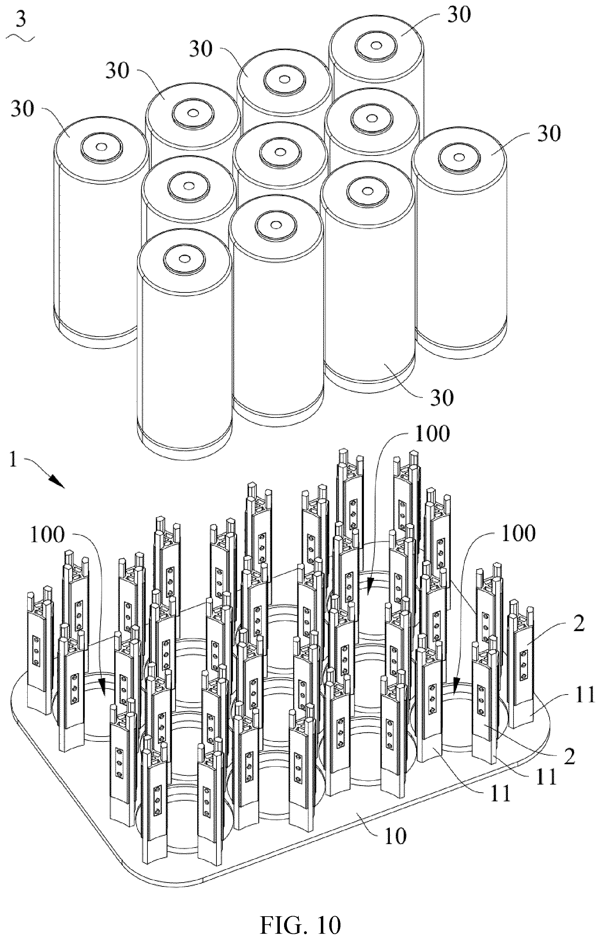

As shown in FIG. 9 and FIG. 10, according to one or more embodiments of the present disclosure, a battery module 3 includes multiple cells 30 and a bracket 1 as provided in one or more embodiments of the present disclosure. Multiple cells 30 are inserted into multiple placement grooves 100 in a one-to-one correspondence. Each of the elastic structures 20 abut against the outer surface of the corresponding cell 30. By providing the bracket 1 according to one or more embodiments of the present disclosure, the assembly steps of the battery module 3 can be simplified, the assembly efficiency of the battery module 3 can be improved, and the mass production difficulty of the battery module 3 can be reduced.

Alternatively, the battery module 3 may further include a cell connection structure (not shown) electrically connected to multiple cells 30, such as a Cells Contact System (CCS) integrated bus bar, which is soldered to respective positive electrodes and negative electrodes of the multiple cells 30, so that the multiple cells 30 are electrically conductive to a circuit.

According to one or more embodiments of the present disclosure, a bracket is provided. The cell to be installed to the bracket can be positioned, without using the positioning tool to load the cell, so that the assembly procedure of the battery module including the bracket is simplified, the assembly efficiency of the battery module is improved, and the difficulty of mass production of the battery module is reduced.

According to one or more embodiments of the present disclosure, a battery module is provided. By providing the battery module with a bracket according to one or more embodiments of the present disclosure, the assembly procedure of the battery module including the bracket is simplified, and the assembly efficiency of the battery module is improved.

In the description of this specification, reference to the terms "embodiment", " example," and the like, means that a particular feature, structure, material, or characteristic described in connection with the embodiment or example is included in at least one embodiment or example of the present disclosure. In the present disclosure, the schematic representation of the above terms does not necessarily refer to the same embodiments or examples.

Some embodiments of the present disclosure have been described in detail above. The description of the above embodiments merely aims to help to understand the present disclosure. Many modifications or equivalent substitutions with respect to the embodiments may occur to those of ordinary skill in the art based on the present disclosure. Thus, these modifications or equivalent substitutions shall fall within the scope of the present disclosure.

## Claims

1. A bracket, applicable to a battery module comprising a plurality of cells, the bracket comprising:
a base provided with a plurality of placement grooves spaced apart from each other and arranged in an array, wherein the base has a plurality of arrangement areas spaced apart from each other, each of the placement grooves has an outer periphery surrounded by ones of the arrangement areas, and the plurality of cells are capable of being inserted respectively into the plurality of placement grooves; and
a plurality of positioning devices arranged respectively in the plurality of arrangement areas, wherein each of the positioning devices comprises one or more elastic structures, and each of the elastic structures is configured to abut against an outer periphery of one of the cells.

2. The bracket according to claim 1, wherein each of the elastic structures comprises a mount provided in one of the arrangement areas, and one or more elastic units; and
each of the elastic units comprises a positioning head configured to abut against an outer periphery of one of the cells, and an elastic member disposed between the mount and the positioning head to provide elastic force to enable the positioning head to abut against the outer periphery of the one of the cells.

3. The bracket according to claim 2, wherein the positioning head is a spherical structure.

4. The bracket according to claim 2, wherein the one or more elastic units comprise a plurality of elastic units arranged at intervals in a direction perpendicular to a plane where the arrangement areas are located.

5. The bracket according to claim 2, wherein the positioning head is configured to abut against an outer periphery of a middle part of one of the cells.

6. The bracket according to claim 2, wherein the mount has a first surface facing one of the cells, and the first surface is provided with a mounting groove that forms a first opening on the first surface; and
the positioning head has a part located within the mounting groove and a remainder extending from the first opening, and the elastic member is connected between the positioning head and the mounting groove.

7. The bracket according to claim 6, wherein the mount further has a second surface away from the one of the cells;
the mount is provided with a mounting hole extending through the mount and forming a second opening on the second surface;
the each of the elastic structures further comprise one or more cover plates, and one of the cover plates is configured to cover the second opening to form the mounting groove; and
the positioning head is partially located within the mounting hole, and the elastic member is connected with the one of the cover plates.

8. The bracket according to any one of claims 1 to 7, wherein each of the placement grooves is surrounded by ones of the positioning devices that are evenly spaced.

9. The bracket according to any one of claims 1 to 7, wherein each of ones of the positioning devices is surrounded by ones of the placement grooves, and the one or more elastic structures of the each of ones of the positioning devices comprise a plurality of elastic structures corresponding respectively to the ones of the placement grooves.

10. The bracket according to claim 9, wherein the each of ones of the positioning devices further comprises a bearing on which the plurality of elastic structures are arranged.

11. The bracket according to claim 10, wherein an outer periphery of the bearing is provided with a plurality of accommodation slots that are spaced and correspond respectively to the ones of the placement grooves, and the plurality of elastic structures are inserted respectively into the accommodation slots.

12. The bracket according to claim 11, wherein each of the plurality of elastic structures comprises a mount and one or more elastic units, and the mount is provided in one of the arrangement areas and inserted into one of the accommodation slots; and
each of the elastic units comprises a positioning head configured to abut against an outer periphery of one of the cells, and an elastic member disposed between the mount and the positioning head to provide elastic force to enable the positioning head to abut against the outer periphery of the one of the cells.

13. The bracket according to claim 12, wherein one of the mount and the one of the accommodation slots is provided with a protrusion, and another of the mount and the one of the accommodation slots is provided with a groove fitting the protrusion.

14. The bracket according to claim 10, wherein the bearing is provided with a plurality of weight-reducing grooves respectively spaced apart from the plurality of elastic structures.

15. A battery module, comprising a plurality of cells and the bracket according to any one of claims 1 to 14;
wherein the plurality of cells are inserted respectively into the plurality of placement grooves, and each of the elastic structures abuts against an outer periphery of one of the cells.
